(19) Europäisches Patentamt

European Patent Office

Office européen des brevets

(11) Veröffentlichungsnummer: **0 377 027 B1**

(12) **EUROPÄISCHE PATENTSCHRIFT**

(45) Veröffentlichungstag der Patentschrift: **27.07.94**

(21) Anmeldenummer: **89907078.3**

(22) Anmeldetag: **24.06.89**

(86) Internationale Anmeldenummer:
**PCT/DE89/00422**

(87) Internationale Veröffentlichungsnummer:
**WO 90/00159 (11.01.90 90/02)**

(51) Int. Cl.⁵: **C03C 3/247**

(54) OPTISCHES FLUORPHOSPHATGLAS MIT ANOMALER POSITIVER TEILDISPERSION UND VERFAHREN ZU SEINER HERSTELLUNG.

(30) Priorität: **29.06.88 DE 3821859**

(43) Veröffentlichungstag der Anmeldung:
**11.07.90 Patentblatt 90/28**

(45) Bekanntmachung des Hinweises auf die
Patenterteilung:
**27.07.94 Patentblatt 94/30**

(84) Benannte Vertragsstaaten:
**AT BE CH DE FR GB IT LI NL**

(56) Entgegenhaltungen:
**DE-A- 1 496 566**
**FR-A- 2 011 703**

(73) Patentinhaber: **Leica Industrieverwaltung
GmbH
Postfach 20 20
D-35530 Wetzlar(DE)**

(72) Erfinder: **MEINERT, Norbert
Am Sportfeld 5
D-6336 Solms-Albshausen(DE)**
Erfinder: **GELZENLEUCHTER, Dieter
Gartenstra e 32
D-6330 Wetzlar 26(DE)**
Erfinder: **FRANEK, Henning
Mühlenkopfstra e 5
D-6333 Braunfels-Tiefenbach(DE)**

**Beschreibung**

Die Anmeldung betrifft ein optisches Fluorphosphatglas mit anomaler positiver Teildispersion, bei der die Kristallisationsneigung äußerst gering ist.

Es ist bereits ein optisches Glas auf der Basis von Metaphosphaten und Fluoriden von Erdalkalien und Aluminium bekannt, das wie folgt zusammengesetzt ist:

| | |
|---|---|
| $Ca(PO_3)_2$: | 2,53 Gew.-% |
| $Ba(PO_3)_2$: | 18,01 Gew.-% |
| $Al(PO_3)_3$: | 22,94 Gew.-% |
| $MgF_2$: | 9,70 Gew.-% |
| $CaF_2$: | 7,40 Gew.-% |
| $SrF_2$: | 21,80 Gew.-% |
| $AlF_3$: | 6,69 Gew.-% |
| BaO: | 9,93 Gew.-% |
| $KHF_2$: | 1,00 Gew.-% |

Die atomare Zusammensetzung dieses bekannten Glases ist folgende (in Atom-%):
Mg: 3,78; Ca: 4,31; Sr: 15,20; Ba: 17,29; Al : 4,49; K: 0.50; P: 12,66; O: 20,62 und F: 21,15.

Dieses bekannte Glas weist eine Brechzahl $n_e$ von 1,544 und eine Abbe-Zahl $\nu_e$ von 73,1 auf. Es ist jedoch nur unter großen Schwierigkeiten technologisch erschmelzbar. Die Ausbeute ist extrem gering, was u.a. durch die starke Kristallisationsneigung dieses Glases begründet ist.

Es ist daher die Aufgabe der vorliegenden Erfindung, ein Glas mit analoger optischer Lage, also mit einer identischen Brechzahl $n_e$ und einer identischen Abbe-Zahl $\nu_e$, bereitzustellen, bei dem die erwähnten schmelztechnologischen Nachteile vermieden werden. Die Aufgabe besteht darüber hinaus darin, ein Verfahren zum kristallisationsfreien Erschmelzen des Glases in großen Einheiten anzugeben.

Diese Aufgabe wird erfindungsgemäß durch die Merkmale des Patentanspruchs 1 bzw. des Patentanspruch 4 gelöst. Weitere Ausgestaltungen ergeben sich aus den Unteransprüchen.

Die erfindungsgemäßen Gläser haben die folgende atomare Zusammensetzung:

Tabelle 1

| (in Atom-%): | | | |
|---|---|---|---|
| | Erfindungsbereich | bevorzugter Bereich | bevorzugtes Einzeibeispiel |
| Mg | 2,0 - 3,5 | 2,0 - 3,0 | 2,93 |
| Ca | 2,4 - 4,5 | 3,0 - 4,0 | 3,88 |
| Sr | 13,0 - 16,0 | 14,0 - 15,0 | 14,51 |
| Ba | 22,0 - 25,0 | 23,0 - 24,0 | 23,55 |
| Al | 4,5 - 6,0 | 5,0 - 6,0 | 5,05 |
| K | 0,1 - 0,3 | 0,1 - 0,2 | 0,16 |
| P | 9,0 - 12,0 | 10,0 - 11,0 | 10,51 |
| O | 17,0 - 20,0 | 18,0 - 19,0 | 18,14 |
| F | 20,0 - 23,0 | 21,0 - 22,0 | 21,27 |
| $n_e$ | 1,53 - 1,55 | 1,54- 1,55 | 1,544 |
| $\nu_e$ | 72,8 - 73,5 | 73,0 - 73,2 | 73,10 |
| $+\Delta\nu_e$ | 11,8 - 12,5 | 12,1 - 12,2 | 12,17 |

In der nachfolgenden Tabelle 2 sind die Erfindungsbereicne für die Ausgangszusammensetzungen angegeben:

Tabelle 2

| (in Gew.-%): | | | |
|---|---|---|---|
| | Erfindungsbereich | bevorzugte Erfindungs-Intervalle | bevorzugtes Einzelbeispiel |
| $Ca(PO_3)_2$ | 1,0 - 2,5 | 1,6 - 1,8 | 1,7 |
| $Ba(PO_3)_2$ | 23,0 - 25,5 | 24,0 - 25,0 | 24,2 |
| $Al(PO_3)_3$ | 12,0 - 14,5 | 13,0 - 14,0 | 13,9 |
| $MgF_2$ | 6,5 - 8,5 | 7,0 - 8,0 | 7,5 |
| $CaF_2$ | 5,5 - 8,0 | 6,0 - 7,0 | 6,9 |
| $SrF_2$ | 16,0 - 19,0 | 17,0 - 18,0 | 17,9 |
| $AlF_3$ | 10,0 - 12,5 | 11,0 - 12,0 | 11,3 |
| $SrO$ | 2,0 - 3,0 | 2,3 - 2,5 | 2,4 |
| $BaO$ | 12,5 - 14,5 | 13,0 - 14,0 | 13,7 |
| $K_2TiF_6$ | 0,2 - 0,7 | 0,4 - 0,6 | 0,5 |

Das Erschmelzen des Ausgangsgemenges erfolgt in einem Platintiegel in an sich bekannter Weise. Das aus dem Ausgangsgemenge erschmolzene Glas ist farblos, schlierenfrei, kristallisationstabil und mit einer wesentlich höheren Ausbeute herstellbar als das bekannte Glas. Nach der Feinkühlung weist das aufgeführte Einzelbeispiel folgende optische Daten auf:

$n_e$ = 1,544

$\nu_e$ = 73,10

$\vartheta'_g$ = 0,4804

$+\Delta\nu_e$ = 12,17

Hierin bedeuten:

$n_e$ = Brechzahl

$\nu_e$ = Abbe-Zahl (Reziprok-Wert der Dispersion)

$\vartheta'_g$ = (eigentliche) anomale Teildispersion, wobei gilt:

$$\vartheta'_g = \frac{n_g - n_{F'}}{n_{F'} - n_{C'}}.$$

Dabei bedeuten die tiefgestellten Indizes:

g = blaue Quecksilberlinie (435,84 nm);

F' = blaue Cadmiumlinie (479,99 nm);

C' = rote Cadmiumlinie (643,85 nm);

$+\Delta\nu_e$ = positive Abweichung von der sog. "Normalgeraden", wie sie beispielsweise in der Zeichnung der DE-PS 1 496 563 bzw. der korrespondierenden US-PS 3 451 829 graphisch dargestellt und näher erläutert wurde. Dieser Differenzbetrag wird als "positiver anomaler Teildispersionswert" bezeichnet.

Das erhaltene Glas weist die in der folgenden Tabelle 3 angegebene Transmissionscharakteristik auf:

EP 0 377 027 B1

Tabelle 3

| λ[nm] | $\tau_i$[5 nm] | $\tau_i$[25 nm] |
|---|---|---|
| 1014,0 | 0,998 | 0,990 |
| 700 | 0,999 | 0,995 |
| 660 | 0,999 | 0,995 |
| 620 | 0,999 | 0,995 |
| 580 | 0,998 | 0,993 |
| 546,1 | 0,999 | 0,997 |
| 500 | 0,997 | 0,988 |
| 460 | 0,996 | 0,983 |
| 435,8 | 0,994 | 0,973 |
| 420 | 0,993 | 0,968 |
| 404,7 | 0,992 | 0,963 |
| 400 | 0,991 | 0,958 |
| 390 | 0,989 | 0,948 |
| 380 | 0,985 | 0,927 |
| 370 | 0,976 | 0,884 |
| 365 | 0,963 | 0,829 |
| 350 | 0,883 | 0,537 |
| 334,1 | 0,612 | 0,086 |
| 320 | 0,158 | -- |
| 310 | 0,045 | -- |

Dabei bedeuten:

λ : die verwendete Meßweilenlänge [nm] ;

$\tau_i$ (5 mm) : den Reintransmissionsgrad eines 5 mm starken Glasplättchens;

$\tau_i$ (25 mm) : den Reintransmissionsgrad eines 25 mm starken Glasplättchens.

Weitere physiko-chemische Eigenschaften des erhaltenen Glases sind nachfolgend angegeben:

linearer thermischer Ausdehnungskoeffizient:

$\alpha_{20/300\,°C} = 13,43 \cdot 10^{-6}$/K; Transformationstemperatur $T_g = 502\,°C$;

Dichte $\rho = 3,64$ g/cm$^3$;

Knoop-Härte HK = 408.

Das erfindungsgemäße Glas ist preßbar und fluoreszenzarm und ist für hochkorrigierte Objektive verwendbar.

**Patentansprüche**

**1.** Optisches Fluorphosphatglas mit einer anomalen positiven Teildispersion $\Delta\nu_e$ zwischen +11,8 und +12,5, einer Brechzahl $n_e$ zwischen 1,53 und 1,55 und einer Abbe-Zahl $\nu_e$ zwischen 72,8 und 73,5, **dadurch gekennzeichnet,** daß es die folgende atomare Zusammensetzung aufweist (in Atom %):

| | |
|---|---|
| Mg | 2,0 - 3,5 |
| Ca | 2,5 - 4,5 |
| Sr | 13,0 - 16,0 |
| Ba | 22,0 - 25,0 |
| Al | 4,5 - 6,0 |
| K | 0,1 - 0,3 |
| P | 9,0 - 12,0 |
| O | 17,0 - 20,0 |
| F | 20,0 - 23,0, |

wobei das F/P-Verhältnis zwischen 1,8 und 2,4 liegt und die Summe der Erdalkalien zwischen 39,5 und 49 beträgt.

4

2. Glas nach Anspruch 1, **dadurch gekennzeichnet,** daß es eine Brechzahl $n_e$ zwischen 1,54 und 1,55, eine Abbe-Zahl $\nu_e$ zwischen 73,0 und 73,2, einen positiven anomalen Teildispersionswert $\Delta\nu_e$ zwischen +12,1 und +12,2 sowie folgende atomare Zusammensetzung aufweist (in Atom-%):

| Mg | 2,0 - 3,0 |
|----|-----------|
| Ca | 3,0 - 4,0 |
| Sr | 14,0 - 15,0 |
| Ba | 23,0 - 24,0 |
| Al | 5,0 - 6,0 |
| K | 0,1 - 0,2 |
| P | 10,0 - 11,0 |
| O | 18,0 - 19,0 |
| F | 21,0 - 22,0, |

wobei das F/P-Verhältnis zwischen 1,9 und 2,2 liegt und die Summe der Erdalkalien zwischen 42 und 46 beträgt.

3. Glas nach einem der Ansprüche 1 und 2, **dadurch gekennzeihnet,** daß es eine Brechzahl $n_e$ = 1,544, eine Abbe-Zahl $\nu_e$ = 73,10, ein +$\Delta\nu_e$ = 12,17 und folgende atomare Zusammensetzung aufweist (in Atom-%):

| Mg | 2,93 |
|----|------|
| Ca | 3,88 |
| Sr | 14,51 |
| Ba | 23,55 |
| Al | 5,05 |
| K | 0,16 |
| P | 10,51 |
| O | 18,14 |
| F | 21,27, |

wobei das F/P-Verhältnis 2,0 und die Summme der Erdalkalien 44,87 beträgt.

4. Verfahren zur Herstellung eines optischen Fluorphosphatglases nach einem der vorhergehenden Ansprüche, **dadurch gekennzeichnet,** daß es aus einem Gemenge erschmolzen wird, welches folgende Ausgangszusammensetzung aufweist (in Gew.-%):

| $Ca(PO_3)_2$ | 1,0 - 2,5 |
|--------------|-----------|
| $Ba(PO_3)_2$ | 23,0 - 25,5 |
| $Al(PO_3)_3$ | 12,0 - 14,5 |
| $MgF_2$ | 6,5 - 8,5 |
| $CaF_2$ | 5,5 - 8,0 |
| $SrF_2$ | 16,0 - 19,0 |
| $AlF_3$ | 10,0 - 12,5 |
| SrO | 2,0 - 3,0 |
| BaO | 12,5 - 14,5 |
| $K_2TiF_6$ | 0,2 - 0,7, |

wobei der Gehalt an Erdalkalifluoriden zwischen 28,0 und 35,5 und der Gesamtgehalt aller eingesetzten Fluoride zwischen 38,2 und 48,7 beträgt.

5. Verfahren nach Anspruch 4, **dadurch gekennzeichnet,** daß das Gemenge folgende Ausgangszusammensetzung aufweist (in Gew.-%):

| Ca (PO$_3$)$_2$ | 1,6 - 1,8 |
|---|---|
| Ba(PO$_3$)$_2$ | 24,0 - 25,0 |
| Al(PO$_3$)$_3$ | 13,0 - 14,0 |
| MgF$_2$ | 7,0 - 8,0 |
| CaF$_2$ | 6,0 - 7,0 |
| SrF$_2$ | 17,0 - 18,0 |
| AlF$_3$ | 11,0 - 12,0 |
| SrO | 2,3 - 2,5 |
| BaO | 13,0 - 14,0 |
| K$_2$TiF$_6$ | 0,4 - 0,6, |

wobei der Gehalt an Erdalkalifluoriden zwischen 30 und 33 und der Gesamtgehalt aller eingesetzten Fluoride zwischen 41,4 und 45,6 beträgt.

6. Verfahren nach einem der Ansprüche 4 und 5, **dadurch gekennzeichnet,** daß es aus einem Gemenge erschmolzen wird, welches folgende Ausgangszusammensetzung aufweist (in Gew.-%):

| Ca(PO$_3$)$_2$ | 1,7 |
|---|---|
| Ba(PO3)$_2$ | 24,2 |
| Al(PO3)$_3$ | 13,9 |
| MgF$_2$ | 7,5 |
| CaF$_2$ | 6,9 |
| SrF$_2$ | 17,9 |
| AlF$_3$ | 11,3 |
| SrO | 2,4 |
| BaO | 13,7 |
| K$_2$TiF$_6$ | 0,5, |

wobei der Gehalt an Erdalkalifluoriden 32,3 und der Gesamtgehalt aller eingesetzter Fluoride 44,1 beträgt.

**Claims**

1. Optical fluorophosphate glass with an anomolous positive incremental dispersion $\Delta\nu_e$ between +11.8 and +12.5, a refractive index between 1.53 and 1.55 and an Abbe coefficient $\nu_e$ between 72.8 and 73.5, characterised thereby that it has the following atomic composition (in atom %):

| Mg | 2.0 - 3.5 |
|---|---|
| Ca | 2.5 - 4.5 |
| Sr | 13.0 - 16.0 |
| Ba | 22.0 - 25.0 |
| Al | 4.5 - 6.0 |
| K | 0.1 - 0.3 |
| P | 9.0 - 12.0 |
| O | 17.0 - 20.0 |
| F | 20.0 - 23.0, |

wherein the F/P ratio lies between 1.8 and 2.4 and the sum of the alkaline earths amounts to between 39.5 and 49.

2. Glass according to claim 1, characterised thereby that it has a refractive index $n_e$ between 1.54 and 1.55, an Abbe coefficient $\nu_e$ between 73.0 and 73.2, a positive anomalous partial dispersion value $\Delta\nu_e$ between +12.1 and +12.2 as well as the following atomic composition (in atom %):

| | |
|---|---|
| Mg | 2.0 - 3.0 |
| Ca | 3.0 - 4.0 |
| Sr | 14.0 - 15.0 |
| Ba | 23.0 - 24.0 |
| Al | 5.0 - 6.0 |
| K | 0.1 - 0.2 |
| P | 10.1 - 11.0 |
| O | 18.0 - 19.0 |
| F | 21.0 - 22.0 |

wherein the F/P ratio lies between 1.9 and 2.2 and the sum of the alkaline earths amounts to between 42 and 46.

3. Glass according to one of claims 1 and 2, characterised thereby that it has a refractive index $n_e$ = 1.544, an Abbe coefficient $\nu_e$ = 73.10, a + $\Delta\nu_e$ = 12.17 and the following atomic composition (in atom %):

| | |
|---|---|
| Mg | 2.93 |
| Ca | 3.88 |
| Sr | 14.51 |
| Ba | 23.55 |
| Al | 5.05 |
| K | 0.16 |
| P | 10.51 |
| O | 18.14 |
| F | 21.27, |

wherein the F/P ratio amounts to 2.0 and the sum of the alkaline earths to 44.87.

4. Method of producing an optical fluorophosphate glass according to one of the preceding claims, characterised thereby that it is melted from a material which has the following initial composition (in wt. %):

| | |
|---|---|
| $Ca(PO_3)_2$ | 1.0 - 2.5 |
| $Ba(PO_3)_2$ | 23.0 - 25.5 |
| $Al(PO_3)_3$ | 12.0 - 14.5 |
| $MgF_2$ | 6.5 - 8.5 |
| $CaF_2$ | 5.5 - 8.0 |
| $SrF_2$ | 16.0 - 19.0 |
| $AlF_3$ | 10.0 - 12.5 |
| SrO | 2.0 - 3.0 |
| BaO | 12.5 - 14.5 |
| $K_2TiF_6$ | 0.2 - 0.7 |

wherein the content of alkaline earth fluorides amounts to between 28.0 and 35.5 and the total content of all fluorides used to between 38.2 and 48.7.

5. Method according to claim 4, characterised thereby that the material has the following initial compositions (in wt. %):

7

| | |
|---|---|
| $Ca(PO_3)_2$ | 1.6 - 1.8 |
| $Ba(PO_3)_2$ | 24.0 - 25.0 |
| $Al(PO_3)_3$ | 13.0 - 14.0 |
| $MgF_2$ | 7.0 - 8.0 |
| $CaF_2$ | 6.0 - 7.0 |
| $SrF_2$ | 17.0 - 18.0 |
| $AlF_3$ | 11.0 - 12.0 |
| SrO | 2.3 - 2.5 |
| BaO | 13.0 - 14.0 |
| $K_2TiF_6$ | 0.4 - 0.6 |

wherein the content of alkaline earth fluorides amounts to between 30 and 33 and the total content of all fluorides used to between 41.4 and 45.6.

**6.** Method according to one of claims 4 and 5, characterised thereby that it is melted from a material which has the following initial composition (in wt. %):

| | |
|---|---|
| $Ca(PO_3)_2$ | 1.7 |
| $Ba(PO_3)_2$ | 24.2 |
| $Al(PO_3)_3$ | 13.9 |
| $MgF_2$ | 7.5 |
| $CaF_2$ | 6.9 |
| $SrF_2$ | 17.9 |
| $AlF_3$ | 11.3 |
| SrO | 2.4 |
| BaO | 13.7 |
| $K_2TiF_6$ | 0.5, |

wherein the content of alkaline earth fluorides amounts to 32.3 and the total content of all fluorides used to 44.1.

**Revendications**

**1.** Verre fluorophosphaté optique à dispersion partielle positive anomale $\Delta\nu_e$ entre +11,8 et +12,5, à indice de réfraction $n_e$ compris entre 1,53 et 1,55 et ayant un nombre de Abbe $\nu_e$ compris entre 72,8 et 73,5, caractérisé en ce qu'il présente la composition atomique suivante (en atomes %) :

| | |
|---|---|
| Mg | 2,0 - 3,5 |
| Ca | 2,5 - 4,5 |
| Sr | 13,0 -16,0 |
| Ba | 22,0 -25,0 |
| Al | 4,5 - 6,0 |
| K | 0,1 - 0,3 |
| P | 9,0 -12,0 |
| O | 17,0 -20,0 |
| F | 20,0 -23,0 |

le rapport F/P étant compris entre 1,8 et 2,4 et la somme des métaux alcalino-terreux étant comprise entre 39,5 et 49.

**2.** Verre selon la revendication 1, caractérisé en ce qu'il a un indice de réfraction $n_e$ compris entre 1,54 et 1,55, un nombre de Abbe $\nu_e$ compris entre 73,0 et 73,2, une valeur de dispersion partielle positive anomale $\Delta\nu_e$ comprise entre +12,1 et +12,2 ainsi que la composition atomique suivante (en atomes %) :

| | |
|---|---|
| Mg | 2,0 - 3,0 |
| Ca | 3,0 - 4,0 |
| Sr | 14,0 -15,0 |
| Ba | 23,0 -24,0 |
| Al | 5,0 - 6,0 |
| K | 0,1 - 0,2 |
| P | 10,0 -11,0 |
| O | 18,0 -19,0 |
| F | 21,0 -22,0 |

le rapport F/P étant entre 1,9 et 2,2 et la somme des alcalino-terreux étant entre 42 et 46.

3. Verre selon les revendications 1 et 2, caractérisé en ce qu'il présente un indice de réfraction $n_e$ = 1,544, un nombre de Abbe $\nu_e$ = 73,10, une valeur de $+\Delta\nu_e$ = 12,17 et la composition atomique suivante (en atomes %) :

| | |
|---|---|
| Mg | 2,93 |
| Ca | 3,98 |
| Sr | 14,51 |
| Ba | 23,55 |
| Al | 5,05 |
| K | 0,16 |
| P | 10,51 |
| O | 18,14 |
| F | 21,27, |

le rapport F/P étant de 2,0 et la somme des alcalino-terreux de 44,87.

4. Procédé pour la production d'un verre fluorophosphaté optique selon l'une quelconque des revendications précédentes, caractérisé en ce qu'il est élaboré d'un mélange qui présente la composition de départ qui suit (en % en poids) :

| | |
|---|---|
| $Ca(PO_3)_2$ | 1,0 - 2,5 |
| $Ba(PO_3)_2$ | 23,0 -25,5 |
| $Al(PO_3)_3$ | 12,0 -14,5 |
| $MgF_2$ | 6,5 - 8,5 |
| $CaF_2$ | 5,5 - 8,0 |
| $SrF_2$ | 16,0 -19,0 |
| $AlF_3$ | 10,0 -12,5 |
| SrO | 2,0 - 3,0 |
| BaO | 12,5 -14,5 |
| $K_2TiF_6$ | 0,2 - 0,7 |

la teneur en fluorures alcalino-terreux étant comprise entre 28,0 et 35,5 et la quantité totale de tous les fluorures incorporés étant comprise entre 38,2 et 48,7.

5. Procédé selon la revendication 4, caractérisé en ce que le mélange présente la composition de départ qui suit (en % en poids) :

| Ca(PO$_3$)$_2$ | 1,6 - 1,8 |
|---|---|
| Ba(PO$_3$)$_2$ | 24,0 -25,0 |
| Al(PO$_3$)$_3$ | 13,0 -14,0 |
| MgF$_2$ | 7,0 - 8,0 |
| CaF$_2$ | 6,0 - 7,0 |
| SrF$_2$ | 17,0 -18,0 |
| AlF$_3$ | 11,0 -12,0 |
| SrO | 2,3 - 2,5 |
| BaO | 13,O -14,0 |
| K$_2$TiF$_6$ | 0,4 - 0,6 |

la teneur en fluorures alcalino-terreux étant comprise entre 30 et 33 et la teneur totale de tous les fluorures utilisés étant comprise entre 41,4 et 45,6.

6. Procédé selon l'une quelconque des revendications 4 et 5, caractérisé en ce qu'il est élaboré d'un mélange qui présente la composition de départ qui suit (en % en poids) :

| Ca(PO$_3$)$_2$ | 1,7 |
|---|---|
| Ba(PO$_3$)$_2$ | 24,2 |
| Al(PO$_3$)$_3$ | 13,9 |
| MgF$_2$ | 7,5 |
| CaF$_2$ | 6,9 |
| SrF$_2$ | 17,9 |
| AlF$_3$ | 11,3 |
| SrO | 2,4 |
| BaO | 13,7 |
| K$_2$TiF$_6$ | 0,5 |

la teneur en fluorures alcalino-terreux étant de 32,3 et la quantité totale de tous les fluorures utilisés est de 44,1.